# EUROPÄISCHE PATENTSCHRIFT

(11) **EP 2 655 922 B1**
(45) Veröffentlichungstag und Bekanntmachung des Hinweises auf die Patenterteilung: **26.06.2019**
(21) Anmeldenummer: 11833597.5
(22) Anmeldetag: 20.12.2011
(51) Int. Cl.: F16F 15/14

(54) **FLIEHKRAFTPENDELEINRICHTUNG**
CENTRIFUGAL-FORCE PENDULUM DEVICE
DISPOSITIF PENDULAIRE À FORCE CENTRIFUGE

(30) Priorität: 23.12.2010 DE 102010055895
(43) Veröffentlichungstag der Anmeldung: 30.10.2013
(73) Patentinhaber: Schaeffler Technologies AG & Co. KG, 91074 Herzogenaurach (DE); Daimler AG, 70327 Stuttgart (DE)
(72) Erfinder: SCHNÄDELBACH, David, 76534 Baden-Baden-Neuweier (DE); BARAL, Florian, 76337 Waldbronn (DE); SCHUSTER, Tobias, 73733 Esslingen (DE); ZIEGLER, Bernhard, 73098 Rechberghausen (DE)
(86) Internationale Anmeldenummer: PCT/DE2011/002145
(87) Internationale Veröffentlichungsnummer: WO 2012/089190

(56) Entgegenhaltungen:
- WO-A1-2011/110168
- DE-A1-102006 028 556
- DE-A1-102009 042 836

## Beschreibung

Die Erfindung betrifft eine Fliehkraftpendeleinrichtung mit den Merkmalen gemäß dem Oberbegriff von Anspruch 1.

Aus der Anmeldung DE 10 2010 011 141.4 ist eine Fliehkraftpendeleinrichtung mit einem um eine Drehachse drehbaren Pendelflansch und mit zwei axial beidseitig des Pendelflansches mittels eines in einem Ausschnitt des Pendelflansches aufgenommenen Abstandsbolzens zu einem Pendelmassenpaar befestigten Pendelmassen bekannt. Das Pendelmassenpaar ist weiterhin unter Ausbildung einer Pendelbahn mittels zwei Abrollelementen gegenüber dem Pendelflansch geführt und begrenzt verschwenkbar. Dazu sind die Abrollelemente in bogenförmigen, im Speziellen nierenförmigen Führungsbahnen in den Pendelmassen und in komplementär geformten Führungsbahnen in dem Pendelflansch aufgenommen und darin abrollbar. In einem durch den Ausschnitt in dem Pendelflansch greifenden axialen Bereich des Abstandsbolzens ist dieser von einem Dämpfungsmittel in Form eines Dämpfungsmantels zur Dämpfung eines Anschlagens des Abstandsbolzens an dem Ausschnitt umgeben. Die Dämpfung des Anschlagens erfolgt durch eine Einfederung des Dämpfungsmittels unter Ausbildung eines Einfederweges. Dabei kann es bei großer Belastung, das bedeutet bei großem relativen Impuls der Pendelmassen bzw. des Pendelmassenpaares gegenüber dem Pendelflansch zu einer überhöhten Beanspruchung des Dämpfungsmittels kommen.

DE 10 2006 028556 A1 offenbart eine Drehmomentübertragungseinrichtung mit einer gattungsgemäßen Fliehkraftpendeleinrichtung.

Aufgabe der Erfindung ist es, die Zuverlässigkeit einer Fliehkraftpendeleinrichtung zu erhöhen und die Geräuschbildung zu verringern.

Erfindungsgemäß wird diese Aufgabe durch eine Fliehkraftpendeleinrichtung mit den Merkmalen gemäß Anspruch 1 gelöst.

Entsprechend wird eine Fliehkraftpendeleinrichtung mit einem Pendelflansch und mit wenigstens zwei beidseitig des Pendelflansches mittels eines in einem Ausschnitt des Pendelflansches aufgenommenen Abstandsbolzens zu einem Pendelmassenpaar befestigten Pendelmassen vorgeschlagen wobei das Pendelmassenpaar mittels wenigstens zwei Abrollelementen gegenüber dem Pendelflansch geführt und begrenzt verschwenkbar ist und die Abrollelemente in Führungsbahnen in den Pendelmassen und in komplementär geformten Führungsbahnen in dem Pendelflansch aufgenommen und abrollbar sind und wobei der Abstandsbol-zen in seinem durch den Ausschnitt in dem Pendelflansch greifenden axialen Bereich mit einem Dämpfungsmittel zur Dämpfung eines Anschlagens des Abstandsbolzens an dem Ausschnitt ausgestattet ist. Dabei wird eine Einfederung des Dämpfungsmittels durch ein Anschlagen eines Abrollelements an Anlageflächen der Führungsbahn des Pendelflansches und an Anlageflächen der Führungsbahn der Pendelmassen begrenzt, wodurch die Zuverlässigkeit der Fliehkraftpendeleinrichtung, insbesondere des Dämpfungsmittels an dem Abstandsbolzen erhöht wird.

In einer bevorzugten Ausführungsform der Erfindung ist das Dämpfungsmittel eingefedert, wenn das Abrollelement an der Führungsbahn anschlägt. Vorteilhafterweise wird durch das Anschlagen des Abrollelements an der Führungsbahn eine maximale Einfederung des Dämpfungsmittels begrenzt.

In einer weiteren Ausgestaltung der Erfindung umschließt das Dämpfungsmittel den Abstandsbolzen unter Ausbildung eines Dämpfungsmantels.

In einer vorteilhaften Ausführungsform der Erfindung ist das Dämpfungsmittel aus einem elastischen Material gebildet, wobei das elastische Material ein Elastomer und/oder ein Kunststoff und/oder ein Gummi und/oder ein Verbundwerkstoff sein kann.

Vorteilhafterweise ist das Dämpfungsmittel stoffschlüssig oder formschlüssig mit dem Abstandsbolzen verbunden.

In einer weiteren bevorzugten Ausgestaltung der Erfindung sind wenigstens zwei Pendelmassenpaare umfangsseitig benachbart zueinander angeordnet.

Auch umfasst die Erfindung eine Drehmomentübertragungseinrichtung wie einen hydrodynamischer Drehmomentwandler und/oder einen Torsionsschwingungsdämpfer und/oder eine nass laufende oder trocken laufende Kupplungseinrichtung und/oder ein Zweimassenschwungrad mit einer Fliehkraftpendeleinrichtung nach einer oder mehreren der vorangehenden Ausführungsformen.

Weitere Vorteile und vorteilhafte Ausgestaltungen der Erfindung ergeben sich aus der Beschreibung und den Abbildungen, bei deren Darstellung zugunsten der Übersichtlichkeit auf eine maßstabsgetreue Wiedergabe verzichtet wurde. Alle erläuterten Merkmale sind nicht nur in der angegebenen Kombination, sondern auch in anderen Kombinationen beziehungsweise in Alleinstellung anwendbar, ohne den Rahmen der Erfindung zu verlassen.

Die Erfindung wird im Folgenden unter Bezugnahme auf die Abbildungen ausführlich beschrieben. Es zeigen im Einzelnen:
- Figur 1:: Halbquerschnitt eines Torsionsschwingungsdämpfers mit angeordneter Fliehkraftpendeleinrichtung nach dem Stand der Technik.
- Figur 2:: Dreidimensionale Seitenansicht einer Fliehkraftpendeleinrichtung nach dem Stand der Technik.
- Figur 3:: Seitenansicht eines Ausschnitts einer Fliehkraftpendeleinrichtung in einer speziellen Ausführungsform der Erfindung.

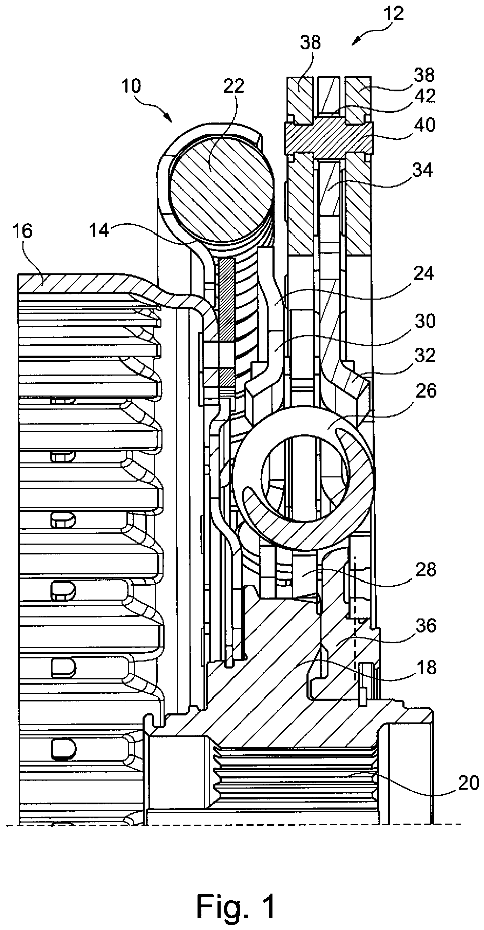

In Figur 1 ist ein Halbquerschnitt eines Torsionsschwingungsdämpfers 10 mit angeordneter Fliehkraftpendeleinrichtung 12 nach dem Stand der Technik gezeigt. An dem Dämpfereingangsteil 14 des Torsionsschwingungsdämpfers 10 ist ein Reiblamellenträger 16 in Funktion eines Kupplungsausgangs einer Kupplungseinrichtung angeordnet. Die Kupplungseinrichtung kann beispielsweise als Wandlerüberbrückungskupplung und/oder als nass laufende Kupplung ausgeführt sein. Der Torsionsschwingungsdämpfer 10 ist dabei wirksam zwischen dem Kupplungsausgang und einer Abtriebsnabe 18 eingebunden, wobei die Abtriebsnabe 18 über eine Verzahnung 20 mit einer Getriebeeingangswelle eines Getriebes in einem Antriebsstrang eines Kraftfahrzeugs verbindbar ist.

Das Dämpfereingangsteil 14 ist radial innen auf der Abtriebsnabe 18 zentriert und axial gesichert aufgenommen und umgreift mit seinem radial äußeren Abschnitt erste Energiespeicherelemente 22, beispielsweise Schraubenfedern, die das Dämpfereingangsteil 14 mit einem Dämpferzwischenteil 24 wirksam verbinden, wobei das Dämpferzwischenteil 24 gegenüber dem Dämpfereingangsteil 14 begrenzt verdrehbar ist. Das Dämpferzwischenteil 24 wiederum ist über die Wirkung radial weiter innen liegender zweiter Energiespeicherelemente 26, beispielsweise Schraubenfedern gegenüber einem Dämpferausgangsteil 28 begrenzt verdrehbar. Das Dämpferausgangsteil 28 ist mit der Abtriebsnabe 18 drehfest verbunden, beispielsweise über eine Schweißverbindung.

Das Dämpferzwischenteil 24 besteht aus zwei axial beabstandeten Scheibenteilen 30, 32, die das Dämpferausgangsteil 28 axial umschließen und die mit Hilfe eines hier nicht dargestellten Befestigungsmittels, wie Abstandsbolzen oder Abstandsniet miteinander drehfest verbunden sind. Das eine Scheibenteil 32 ist dabei radial nach außen zur Ausbildung eines Pendelflansches 34 verlängert. Der Pendelflansch 34 ist integraler Bestandteil des Scheibenteils 32. Das Scheibenteil 32 ist radial innen mit einer Turbinennabe 36 drehfest verbunden und die Turbinennabe 36 dient der Anbindung und Abstützung eines Turbinenrads eines hydrodynamischen Drehmomentwandlers. Die Turbinennabe 36 ist auf der Abtriebsnabe 18 zentriert und gegenüber dieser drehbar angeordnet.

Der Pendelflansch 34 nimmt in einem radial äußeren Abschnitt zwei axial gegenüberliegende Pendelmassen 38 auf, wobei die Pendelmassen 38 über einen Abstandsbolzen 40 miteinander zu einem Pendelmassenpaar verbunden sind und der Abstandsbolzen 40 durch einen Ausschnitt 42 in dem Pendelflansch 34 durchgreift. Der Abstandsbolzen 40 ist mit der Pendelmasse 38 fest verbunden, beispielsweise vernietet, verschweißt, verschraubt oder verstemmt.

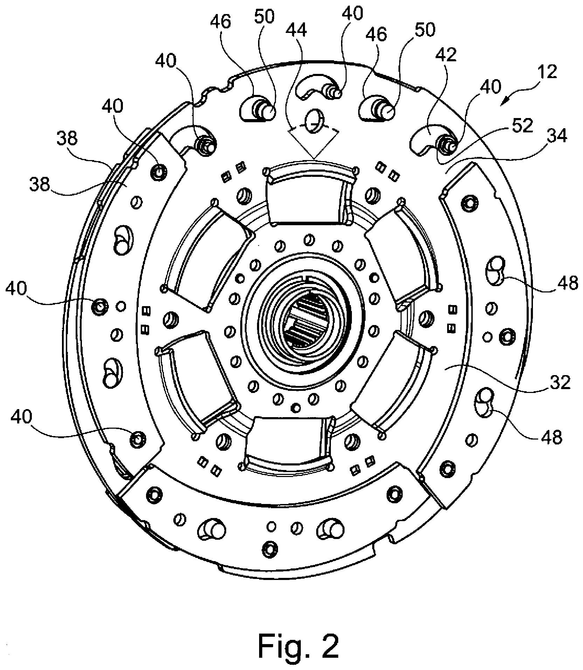

In Figur 2 ist eine dreidimensionale Seitenansicht einer Fliehkraftpendeleinrichtung 12 nach dem Stand der Technik dargestellt wobei die obere Pendelmasse in dieser Zeichnungsdarstellung zur Verdeutlichung des axial darunter liegenden Bereichs ausgeblendet wurde. Die Fliehkraftpendeleinrichtung 12 ist an dem Scheibenteil 32 des Dämpferzwischenteils des Torsionsschwingungsdämpfers angeordnet, wobei die radiale Verlängerung des Scheibenteils 32 den Pendelflansch 34 zur Aufnahme der beidseitig des Pendelflansches 34 angeordneten Pendelmassen 38 bildet, wobei jeweils zwei Pendelmassen 38 axial beidseitig des Pendelflansches 34 angeordnet sind und über insgesamt drei Abstandsbolzen 40 zu einem Pendelmassenpaar miteinander verbunden sind. Die Abstandsbolzen 40 greifen jeweils durch Ausschnitte 42 in dem Pendelflansch 34 hindurch, wobei die Ausschnitte 42 derart nierenförmig ausgeformt sind, dass diese eine Pendelbewegung der Pendelmassen 38 gegenüber dem Pendelflansch 34 entlang einer definierten Pendelbahn 44 zulassen. Die Pendelbahn wird wiederum durch die Kontur von Führungsbahnen 46 in den Pendelmassen 38 und komplementär Führungsbahnen 48 in dem Pendelflansch 34 festgelegt, wobei in den nierenförmigen Führungsbahnen Abrollelemente 50, beispielsweise Wälzkörper aufgenommen sind, die an den Führungsbahnen 46, 48 abrollen können.

In einem durch den Ausschnitt 42 in dem Pendelflansch 38 greifenden axialen Bereich ist der Abstandsbolzen 40 mit einem Dämpfungsmittel 52 in Form eines Dämpfungsmantels zur Dämpfung eines Anschlagens des Abstandsbolzens 40 an dem Ausschnitt 42 ausgestattet. Insbesondere besteht das Dämpfungsmittel 52 aus einem elastischen Material, beispielsweise einem Elastomer und/oder einem Kunststoff und/oder einem Gummi und/oder einem Verbundwerkstoff. Dabei ist das Dämpfungsmittel fest, vorzugsweise stoffschlüssig oder formschlüssig oder kraftschlüssig oder reibschlüssig mit dem Abstandsbolzen verbunden.

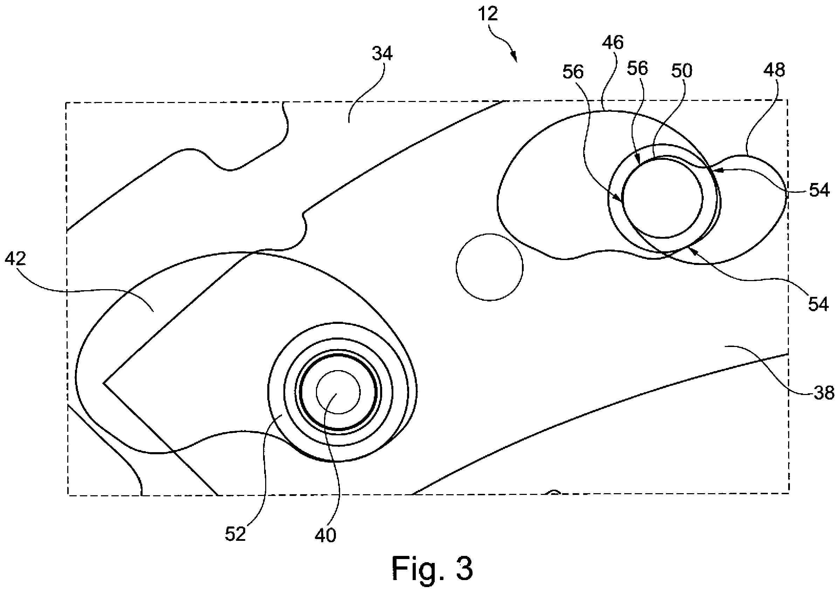

Figur 3 zeigt eine Seitenansicht eines Ausschnitts einer Fliehkraftpendeleinrichtung 12 in einer speziellen Ausführungsform der Erfindung. Dabei ist die Fliehkraftpendeleinrichtung 12 in einem Zustand maximaler Auslenkung in Bezug auf die Pendelbahn dargestellt und bei dem das Dämpfungsmittel 52 an dem Abstandsbolzen 40 sich in einem eingefederten Zustand befindet. Die maximale Auslenkung der Pendelmasse 38 gegenüber dem Pendelflansch 34 wird durch ein Angrenzen oder Anschlagen des Abrollelements 50 an den jeweiligen Führungsbahnen 46, 48 in dem Pendelflansch und der Pendelmasse begrenzt, indem das Abrollelement an den Anlageflächen 54 der Führungsbahn 46 und an den Anlageflächen 56 der Führungsbahn 48 zur Anlage kommt und wodurch verhindert wird, dass das Dämpfungsmittel 52 weiter einfedert. Damit kann eine Überbelastung des Dämpfungsmittels 52 verhindert werden. Das Anschlagen des Abrollelementes 50 an den Führungsbahnen 46, 48 kann vorzugsweise durch das Einfedern des Dämpfungsmittels 52 an dem Abstandsbolzen 40 gedämpft erfolgen.

### Bezugszeichenliste

- 10: Torsionsschwingungsdämpfer
- 12: Fliehkraftpendeleinrichtung
- 14: Dämpfereingangsteil
- 16: Reiblamellenträger
- 18: Abtriebsnabe
- 20: Verzahnung
- 22: Energiespeicherelement
- 24: Dämpferzwischenteil
- 26: Energiespeicherelement
- 28: Dämpferausgangsteil
- 30: Scheibenteil
- 32: Scheibenteil
- 34: Pendelflansch
- 36: Turbinennabe
- 38: Pendelmasse
- 40: Abstandsbolzen
- 42: Ausschnitt
- 44: Pendelbahn
- 46: Führungsbahn
- 48: Führungsbahn
- 50: Abrollelement
- 52: Dämpfungsmittel
- 54: Anlagefläche
- 56: Anlagefläche

## Patentansprüche

1. Fliehkraftpendeleinrichtung (12) mit einem Pendelflansch (34) und mit wenigstens zwei beidseitig des Pendelflansches (34) mittels eines in einem Ausschnitt (42) des Pendelflansches (34) aufgenommenen Abstandsbolzens (40) zu einem Pendelmassenpaar befestigten Pendelmassen (38) wobei das Pendelmassenpaar mittels wenigstens zwei Abrollelementen (50) gegenüber dem Pendelflansch (34) geführt und begrenzt verschwenkbar ist und die Abrollelemente (50) in Führungsbahnen (48) in den Pendelmassen und in komplementär geformten Führungsbahnen (46) in dem Pendelflansch aufgenommen und abrollbar sind und wobei der Abstandsbolzen (40) in seinem durch den Ausschnitt (42) in dem Pendelflansch greifenden axialen Bereich mit einem Dämpfungsmittel (52) zur Dämpfung eines Anschlagens des Abstandsbolzens (40) an dem Ausschnitt (42) ausgestattet ist **dadurch gekennzeichnet, dass** die Führungsbahnen (46, 48) ausgelegt sind, um eine Einfederung des Dämpfungsmittels (52) durch ein Anschlagen eines Abrollelements (50) an Anlageflächen (54) der Führungsbahn (46) des Pendelflansches (34) und an Anlageflächen (56) der Führungsbahn (48) der Pendelmassen (38) zu begrenzen.

2. Fliehkraftpendeleinrichtung (12) nach Anspruch 1, **dadurch gekennzeichnet, dass** das Dämpfungsmittel (52) eingefedert ist, wenn das Abrollelement (50) an der Führungsbahn (46, 48) anschlägt.

3. Fliehkraftpendeleinrichtung (12) nach Anspruch 2, **dadurch gekennzeichnet, dass** durch das Anschlagen eine maximale Einfederung des Dämpfungsmittels begrenzt wird.

4. Fliehkraftpendeleinrichtung (12) nach einem der Ansprüche 1 bis 3, **dadurch gekennzeichnet, dass** das Dämpfungsmittel (52) den Abstandsbolzen (40) als Dämpfungsmantel umschließt.

5. Fliehkraftpendeleinrichtung (12) nach einem der Ansprüche 1 bis 4, **dadurch gekennzeichnet, dass** das Dämpfungsmittel (52) aus einem elastischen Material gebildet ist.

6. Fliehkraftpendeleinrichtung (12) nach Anspruch 2, **dadurch gekennzeichnet, dass** das elastische Material ein Elastomer oder ein Kunststoff oder ein Gummi oder ein Verbundwerkstoff ist.

7. Fliehkraftpendeleinrichtung (12) nach einem der Ansprüche 1 bis 6, **dadurch gekennzeichnet, dass** das Dämpfungsmittel (52) stoffschlüssig oder formschlüssig mit dem Abstandsbolzen (40) verbunden ist.

8. Fliehkraftpendeleinrichtung (12) nach einem der Ansprüche 1 bis 7, **dadurch gekennzeichnet, dass** wenigstens zwei Pendelmassenpaare umfangsseitig benachbart zueinander angeordnet sind.

9. Drehmomentübertragungseinrichtung wie hydrodynamischer Drehmomentwandler oder Torsionsschwingungsdämpfer (10) oder nass laufende oder trocken laufende Kupplungseinrichtung oder Zweimassenschwungrad mit einer Fliehkraftpendeleinrichtung (12) nach einem der vorangehenden Ansprüche.

## Claims

1. Centrifugal force pendulum device (12) having a pendulum flange (34) and having at least two pendulum masses (38) which are fastened on both sides of the pendulum flange (34) to form a pendulum mass pair by means of a spacer pin (40) which is received in a cut-out (42) of the pendulum flange (34), the pendulum mass pair being guided and being capable of being pivoted to a limited extent with respect to the pendulum flange (34) by means of at least two rolling elements (50), and the rolling elements (50) being received and being capable of rolling in guide tracks (48) in the pendulum masses and in complementarily shaped guide tracks (46) in the pendulum flange, and the spacer pin (40) being equipped, in its axial region which engages through the cut-out (42) in the pendulum flange, with a damping means (52) for damping a contact of the spacer pin (40) with the cut-out (42), **characterized in that** the guide tracks (46, 48) are designed to limit a deflection of the damping means (52) by way of a contact of a rolling element (50) with bearing faces (54) of the guide track (46) of the pendulum flange (34) and with bearing faces (56) of the guide track (48) of the pendulum masses (38).

2. Centrifugal force pendulum device (12) according to Claim 1, **characterized in that** the damping means (52) is deflected when the rolling element (50) comes into contact with the guide track (46, 48).

3. Centrifugal force pendulum device (12) according to Claim 2, **characterized in that** a maximum deflection of the damping means is limited by way of the contact.

4. Centrifugal force pendulum device (12) according to one of Claims 1 to 3, **characterized in that** the damping means (52) encloses the spacer pin (40) as a damping sheath.

5. Centrifugal force pendulum device (12) according to one of Claims 1 to 4, **characterized in that** the damping means (52) is formed from an elastic material.

6. Centrifugal force pendulum device (12) according to Claim 2, **characterized in that** the elastic material is an elastomer or a plastic or a rubber or a composite material.

7. Centrifugal force pendulum device (12) according to one of Claims 1 to 6, **characterized in that** the damping means (52) is connected to the spacer pin (40) in an integrally joined or positively locking manner.

8. Centrifugal force pendulum device (12) according to one of Claims 1 to 7, **characterized in that** at least two pendulum mass pairs are arranged adjacently with respect to one another on the circumferential side.

9. Torque transmission device such as a hydrodynamic torque converter or a torsional vibration damper (10) or a wet running or dry running clutch device or a dual-mass flywheel having a centrifugal force pendulum device (12) according to one of the preceding claims.

## Revendications

1. Dispositif pendulaire à force centrifuge (12) avec une bride pendulaire (34) et avec au moins deux masses pendulaires (38) fixées en une paire de masses pendulaires de part et d'autre de la bride pendulaire (34) au moyen d'un pivot d'écartement (40) logé dans une découpe (42) de la bride pendulaire (34), dans lequel la paire de masses pendulaires est guidée et peut pivoter de façon limitée par rapport à la bride pendulaire (34) au moyen d'au moins deux éléments roulants (50) et les éléments roulants (50) sont logés et peuvent rouler dans des pistes de guidage (48) dans les masses pendulaires et dans des pistes de guidage de forme complémentaire (46) dans la bride pendulaire et dans lequel le pivot d'écartement (40) est muni dans sa région axiale s'engageant dans la découpe (42) dans la bride pendulaire d'un moyen d'amortissement (52) pour l'amortissement d'un impact du pivot d'écartement (40) sur la découpe (42), **caractérisé en ce que** les pistes de guidage (46, 48) sont conçues pour limiter un enfoncement du moyen d'amortissement (52) par une butée d'un élément roulant (50) sur des faces de butée (54) de la piste de guidage (46) de la bride pendulaire (34) et sur des faces de butée (56) de la piste de guidage (48) des masses pendulaires (38).

2. Dispositif pendulaire à force centrifuge (12) selon la revendication 1, **caractérisé en ce que** le moyen d'amortissement (52) est enfoncé lorsque l'élément roulant (50) bute sur la piste de guidage (46, 48).

3. Dispositif pendulaire à force centrifuge (12) selon la revendication 2, **caractérisé en ce qu'**un enfoncement maximal du moyen d'amortissement est limité par la butée.

4. Dispositif pendulaire à force centrifuge (12) selon l'une quelconque des revendications 1 à 3, **caractérisé en ce que** le moyen d'amortissement (52) entoure le pivot d'écartement (40) sous la forme d'une gaine d'amortissement.

5. Dispositif pendulaire à force centrifuge (12) selon l'une quelconque des revendications 1 à 4, **caractérisé en ce que** le moyen d'amortissement (52) est formé d'un matériau élastique.

6. Dispositif pendulaire à force centrifuge (12) selon la revendication 2, **caractérisé en ce que** le matériau élastique est un élastomère ou une matière plastique ou un caoutchouc ou un matériau composite.

7. Dispositif pendulaire à force centrifuge (12) selon l'une quelconque des revendications 1 à 6, **caractérisé en ce que** le moyen d'amortissement (52) est assemblé par emboîtement ou matériellement au pivot d'écartement (40).

8. Dispositif pendulaire à force centrifuge (12) selon l'une quelconque des revendications 1 à 7, **caractérisé en ce qu'**au moins deux paires de masses pendulaires sont disposées à proximité l'une de l'autre en périphérie.

9. Dispositif de transmission de couple, tel qu'un convertisseur de couple hydrodynamique ou un amortisseur de vibrations de torsion (10) ou un dispositif d'embrayage à fonctionnement humide ou à fonctionnement sec ou un volant d'inertie à deux masses avec un dispositif pendulaire à force centrifuge (12) selon l'une quelconque des revendications précédentes.
